# DEMANDE DE BREVET EUROPEEN

(11) **EP 4 324 687 A1**
(43) Date de publication de la demande: **21.02.2024**
(21) Numéro de dépôt: 23190343.6
(22) Date de dépôt: 08.08.2023
(51) Int. Cl.: B60L 53/18, B60L 53/30, B60L 53/53, B60L 53/57, H02J 7/00

(54) **DISPOSITIF DE COUPLAGE POUR LA RECHARGE DE MOYENS DE STOCKAGE D'ENERGIE ELECTRIQUE D'UN VEHICULE**

(30) Priorité: 09.08.2022 FR 2208205
(71) Demandeur: Mob-Energy, 69008 Lyon (FR)
(72) Inventeur: LEVY, Victor, 69008 LYON (FR); HADDOUT, Ilyass, 69003 LYON (FR)
(74) Mandataire: Be IP

(57) **Abrégé**

L'invention concerne un dispositif de couplage (2) configuré pour être positionné entre une source d'alimentation en énergie électrique et un véhicule électrique afin de permettre le chargement des moyens de stockage d'énergie électrique dudit véhicule. Le dispositif de couplage présente une forme de valise et comprend des roulettes (232) pour faciliter son déplacement. Le dispositif de couplage (2) comprend un module d'interfaçage (22) destiné à être raccordé à la source. Ce module d'interfaçage (22) est déplaçable en rotation entre une position déployée et une position escamotée.

## Description

### DOMAINE DE L'INVENTION

La présente invention concerne le domaine technique des systèmes permettant de charger/recharger des moyens de stockage d'énergie électrique d'un véhicule comprenant un moteur électrique.

Un tel système peut notamment mais non exclusivement être utilisé pour la charge/recharge de moyens de stockage dans un environnement à espace restreint, tel qu'une aire de stationnement composée de stationnements en ouvrage et/ou de stationnements en voirie.

On entend dans le cadre de la présente invention par *« stationnements en ouvrage »,* des stationnements organisés en emplacements délimités dans un espace clos à accès contrôlé, tel qu'un parking aérien, souterrain ou de surface. On entend par « *stationnements en voirie* », des stationnements organisés en emplacements - délimités ou non - dans un espace ouvert payant ou gratuit.

### ARRIERE PLAN DE L'INVENTION

On connaît dans l'état de la technique le document US9592742 décrivant un dispositif de chargement, motorisé et équipé de divers câbles en sortie, pouvant être déplacé sur un parking jusqu'aux abords d'un véhicule électrique. Ce dispositif permet la recharge d'un véhicule électrique à partir de batteries stockées dans le dispositif. Un inconvénient de cette solution est qu'elle nécessite une intervention humaine afin de déplacer et brancher le dispositif de chargement au véhicule.

Pour pallier cet inconvénient, le document KR 2020/0037548 propose une solution de chargement/rechargement de véhicule basé sur l'utilisation d'un robot de chargement/rechargement autonome contenant des batteries, ainsi que d'un boitier d'interfaçage aimanté. Le boitier d'interfaçage comprend un câble de connexion électrique dont l'extrémité est destinée à être reliée aux moyens de stockage du véhicule à charger/recharger, et une prise de raccordement destinée à être connectée au robot de chargement. Le principe de fonctionnement de la solution décrite dans KR 2020/0037548 est le suivant. L'utilisateur place le boitier d'interfaçage aimanté sur le véhicule électrique et commande sa recharge. Suite à cette demande, le robot autonome se déplace jusqu'aux abords du véhicule et vient en contact avec la prise de raccordement du boitier d'interfaçage pour permettre le transfert d'énergie électrique vers les moyens de stockage d'énergie électrique du véhicule. Un inconvénient de la solution décrite dans KR 2020/0037548 est qu'il y'a un risque de dégradation du véhicule lors du couplage du robot de chargement sur le boitier d'interfaçage. Par ailleurs, l'utilisateur doit porter le boitier d'interfaçage - dont le poids est non négligeable du fait de la présence de l'aimant et des différents éléments de connexion électrique qu'il contient - pour l'installer sur son véhicule, ce qui constitue une contrainte non négligeable.

On connaît également de la société *« Zipcharge »* un accumulateur d'énergie d'appoint destiné aux véhicules électriques. À la manière de ce qui existe pour les smartphones avec les batteries externes, cet accumulateur d'énergie d'appoint est susceptible de prolonger l'autonomie du véhicule électrique. Cet accumulateur d'énergie d'appoint présente la forme d'une valise sur roulettes et comprend des batteries pour le stockage d'énergie électrique. Il est supposé être transporté dans le coffre de chaque véhicule électrique et à être extrait du coffre pour permettre un chargement partiel des moyens de stockage du véhicule électrique. Du fait de la présence de batteries, un tel accumulateur d'appoint présente un poids de 20 kg, ce qui peut rendre sa manipulation (installation et extraction du coffre du véhicule) difficile. Par ailleurs, un tel accumulateur d'énergie d'appoint ne permet pas une recharge complète du véhicule électrique (il permet uniquement de prolonger l'autonomie du véhicule, par exemple pour rejoindre une borne de chargement).

Un but de la présente invention est de proposer un dispositif de couplage permettant de pallier au moins l'un des inconvénients précités. Un tel dispositif de couplage est destiné à être couplé :
- d'une part avec une source d'alimentation en énergie électrique, tel qu'une unité mobile autonome (i.e. robot de chargement autonome) incluant des batteries, et
- d'autre part avec des moyens de stockage d'énergie électrique d'un véhicule, pour permettre d'accoupler la source d'alimentation au véhicule afin de charger/recharger les moyens de stockage du véhicule.

### BREVE DESCRIPTION DE L'INVENTION

A cet effet, l'invention propose un dispositif de couplage mobile pour le raccordement électrique de moyens de stockage d'énergie électrique d'un véhicule à une source d'alimentation en énergie électrique, le dispositif comprenant :
- un socle incluant des roulettes,
- un boitier monté sur le socle, ledit boitier incluant une face avant, et une cavité débouchant sur la face avant,
- un ensemble d'organes de liaison pour le raccordement électrique du dispositif de couplage au véhicule, et
- un module d'interfaçage pour le raccordement électrique du dispositif de couplage à la source d'alimentation en énergie électrique, ledit module d'interfaçage comportant :
   - un logement incluant une semelle, et
   - au moins une borne de connexion montée dans le logement et destinée à coopérer avec des moyens de connexion de la source d'alimentation, chaque borne de connexion s'étendant selon un axe (B-B') perpendiculaire à la semelle,
***remarquable en ce que*** le module d'interfaçage est fixé au boitier par une liaison pivot pour permettre le déplacement en rotation du module d'interfaçage relativement au boitier entre :
- une position escamotée dans laquelle le module d'interfaçage s'étend dans la cavité, la semelle du module d'interfaçage et la face avant du boitier étant sensiblement coplanaires dans la position escamotée, et
- une position déployée dans laquelle le module d'interfaçage s'étend au moins partiellement en dehors de la cavité, la semelle du module d'interfaçage s'étendant dans un plan sensiblement perpendiculaire à la face avant du boitier dans la position déployée.

On entend, dans le cadre de la présente invention, par *« moyens de stockage d'énergie électrique »,* soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode).

Des aspects préférés mais non limitatifs du dispositif de couplage selon l'invention sont les suivants :
- la liaison pivot peut comprendre un amortisseur rotatif ;
- le logement peut comprendre en outre une façade opposée à la semelle, ladite façade incluant un orifice dans lequel est logé chaque borne de connexion de sorte que chaque borne de connexion est orientée dans une direction opposée au sol dans la position déployée ;
- la façade du logement peut comprendre au moins un trou borgne d'alignement destiné à coopérer avec un pion d'alignement de la source d'alimentation en énergie électrique lors du raccordement de ladite source au module d'interfaçage ;
- le logement peut comprendre au moins une patte de traction s'étendant en saillie vers l'extérieur ;
- la patte de traction peut s'étendre en saillie de la façade dans une direction opposée à la semelle ;
- le logement peut comprendre des moyens de retenu destinés à coopérer avec des moyens de retenu complémentaires ménagés dans le boitier lorsque le module d'interfaçage est dans la position escamotée ;
- les moyens de retenu peuvent comprendre au moins un aimant et les moyens de retenu complémentaires comprennent au moins un contre-aimant associé, chaque aimant étant positionné sur le logement de sorte à venir en regard de son contre-aimant associé lorsque le module d'interfaçage (22) est dans la position escamotée ;
- la semelle du logement peut comprendre au moins une lumière traversante ménagée sous ladite et au moins une borne de connexion ;
- la semelle du logement peut comprendre au moins un plot s'étendant en saillie vers l'extérieur du logement ;
- chaque plot peut comprendre :
   oun cylindre fixé à une face externe de la semelle, ledit cylindre étant réalisé dans un matériau élastique, et
   aune couche de matériau métallique fixée sur l'extrémité libre du cylindre ;
- la source d'alimentation en énergie électrique peut être une unité mobile autonome, la face avant du boitier comprenant au moins un marqueur de positionnement positionné autour de la cavité ;
- chaque marqueur de positionnement peut être du type marqueur optique et/ou marqueur à résonance électromagnétique ;
- le boitier peut comprendre en outre une face arrière opposée à la face avant, ladite face arrière incluant un amortisseur destiné à absorber les chocs en cas de contact de la face arrière avec le véhicule ;
- l'amortisseur peut consister en au moins une couche de matériau flexible non abrasif, tel qu'un élastomère ;
- le boitier peut comprendre un crochet pour suspendre un composant de connectique de l'ensemble d'organes de liaison ;
- l'ensemble d'organes de liaison peut comprendre :
   ∘ un premier composant de connectique pour la charge/recharge des moyens de stockage en courant alternatif, et/ou
   ∘ un deuxième composant de connectique pour la charge/recharge des moyens de stockage en courant continu ;
- le dispositif peut également comprendre une poignée de préhension fixée au boitier.

### BREVE DESCRIPTION DES DESSINS

D'autres avantages et caractéristiques du dispositif de couplage selon l'invention ressortiront mieux de la description qui va suivre de plusieurs variantes d'exécution, données à titre d'exemples non limitatifs, à partir des dessins annexés sur lesquels :
- La figure 1 est une représentation schématique d'un système permettant de charger/recharger des moyens de stockage d'énergie électrique d'un véhicule comprenant un moteur électrique,
- La figure 2 est une représentation schématique en perspective d'un dispositif de couplage incluant un module d'interfaçage disposé dans une position déployée,
- La figure 3 est une représentation schématique en perspective du dispositif de couplage dans lequel le module d'interfaçage est disposé dans une position escamotée,
- La figure 4 est une représentation schématique en vue de côté du dispositif de couplage dans lequel le module d'interfaçage est dans une position intermédiaire,
- La figure 5 est une représentation schématique d'une roulette folle du dispositif de couplage,
- La figure 6 est une représentation schématique en perspective d'un boitier du dispositif de couplage,
- La figure 7 est une autre représentation schématique en perspective du boitier,
- La figure 8 est une représentation schématique en perspective d'un logement du module d'interfaçage,
- La figure 9 est une représentation schématique en perspective du module d'interfaçage,
- La figure 10 est une représentation schématique en perspective d'une borne de connexion du module d'interfaçage.

### DESCRIPTION DETAILLEE DE L'INVENTION

On va maintenant décrire différents exemples de réalisation de l'invention en référence aux figures. Dans ces différentes figures, les éléments équivalents sont désignés par la même référence numérique.

### 1. Présentation d'un système de chargement incluant le dispositif de couplage

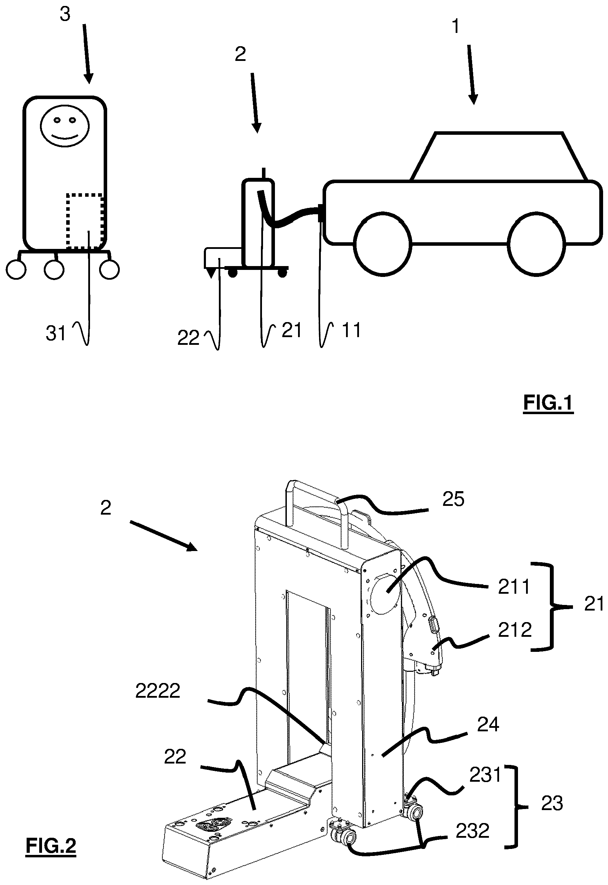

En référence à la figure 1, on a illustré un exemple de solution de charge/recharge d'un véhicule à moteur électrique 1 incluant un dispositif de couplage 2 selon l'invention.

Dans cette solution, le dispositif de couplage 2 permet de raccorder électriquement une unité mobile autonome 3 - formant source d'alimentation en énergie électrique - à des moyens de stockage d'énergie électrique (non représentés) du véhicule 1.

Plus précisément, le dispositif de couplage 2 comprend un ensemble d'organes de liaison 21 pour le raccordement électrique du dispositif de couplage 2 au véhicule 1. Cet ensemble d'organes de liaison 21, qui sera décrit plus en détails dans la suite, est destiné à être connecté par l'utilisateur à une fiche électrique 11 du véhicule 1, ladite fiche électrique 11 étant connectée électriquement aux moyens de stockage du véhicule 1.

Le dispositif de couplage 2 comprend également un module d'interfaçage 22 pour le raccordement électrique du dispositif de couplage 2 à l'unité mobile autonome 3.

Notamment, l'unité mobile autonome 3 est configurée pour s'apparier au module d'interfaçage 22 sans intervention extérieure afin d'assurer le passage - de manière filaire ou par induction - de l'énergie électrique depuis l'unité mobile autonome 3 vers le dispositif de couplage 2. Cette énergie électrique est ensuite transmise aux moyens de stockage du véhicule 1 par l'intermédiaire de l'ensemble d'organes de liaison 21. En particulier, l'unité mobile autonome 3 comprend un module d'amarrage 31 apte à se déplacer en translation verticale pour se connecter au module d'interfaçage 22.

Le fait que la connexion de l'unité mobile autonome 3 au dispositif de couplage 2 soit réalisée *« au sol »* - via le déplacement en translation verticale d'un module d'amarrage 31 - permet de limiter les risques de dégradation du véhicule 1, notamment par rapport à une solution autonome de chargement/rechargement basée sur la connexion d'un dispositif de charge/recharge directement avec le véhicule 1 (ou avec un module d'accouplement fixé sur le véhicule 1).

### 2. Dispositif de couplage

En référence aux figures 2 à 4, le dispositif de couplage 2 comprend :
- un socle 23,
- un boitier 24 monté sur le socle 23,
- une poignée 25 de préhension fixée au boitier 24,
- l'ensemble d'organes de liaison 21 pour le raccordement électrique du dispositif de couplage 2 au véhicule 1, et
- le module d'interfaçage 22 pour le raccordement électrique du dispositif de couplage 2 à la source d'alimentation en énergie électrique.

### 2.1. Socle

Le socle 23 permet de supporter le boîtier 24 du dispositif de couplage 2. Le socle 23 comprend un châssis 231 sensiblement plan. Le châssis 231 peut être de différentes formes et être réalisé en différents matériaux.

Dans le mode de réalisation illustré aux figures 2 à 4, le châssis 231 présente une forme rectangulaire. Il consiste en un cadre composé de deux profilés transversaux. Ces profilés peuvent être à section plate, en L, en U, en H, ou encore à section carrée, circulaire ou rectangulaire.

Le socle 23 comprend également quatre roulettes folles 232 (non motorisées) fixées au châssis 231. Ces roulettes folles 232 permettent de faciliter le déplacement et le guidage du dispositif de couplage 2 par un utilisateur.

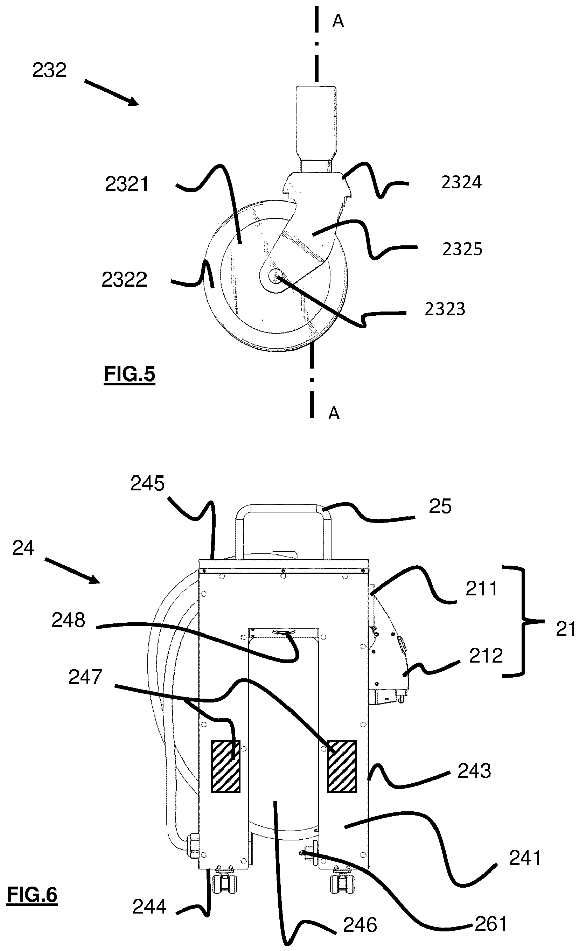

Les roulettes folles 232 peuvent être des roulettes à bande. Plus précisément et en référence à la figure 5, chaque roulette folle arrière 232 peut comprendre une jante circulaire porteuse 2321 et une bande 2322 s'étendant autour de la jante 2321. La jante 2321 est montée rotative autour d'un moyeu 2323, disposé en son centre et dont la jante 2321 est rendue solidaire par des rayons ou une flasque, pleine ou ajourée. L'utilisation de roulettes à bande permet de répartir le poids du dispositif de couplage sur une ligne de contact entre la roulette et le sol. On limite ainsi les risques de dégradation de la surface du sol, notamment par rapport à l'utilisation de roulettes sphériques qui induisent un contact ponctuel avec le sol.

Avantageusement, la bande 2322 de chaque roulette folle 232 peut être réalisée dans un matériau présentant une dureté supérieure à 60 shore A, préférentiellement supérieure à 80 shore A, et encore plus préférentiellement supérieure ou égale à 90 shore A. Ceci permet de limiter les risques de déformation de la bande lors du franchissement d'obstacle du fait du poids du dispositif de couplage 2.

Chaque roulette folle 232 est fixée au châssis 231 au niveau des extrémités des profilés transversaux. Ceci permet d'augmenter la stabilité du dispositif de couplage 2.

Chaque roulette folle 232 est pivotable autour d'un axe de pivotement vertical A-A' sensiblement orthogonal à l'axe de rotation 2323 de la jante 2321. Plus précisément, chaque roulette folle 232 comprend une chape support 2324 incluant au moins une joue latérale 2325 dont l'extrémité inférieure porte la jante 2321. Cette chape support 2324 est montée pivotante autour de l'axe A-A'. De préférence, chaque roulette folle 232 est excentrée, c'est-à-dire une roulette folle dans laquelle l'axe de rotation 2323 de la jante 2321 est décalé par rapport à l'axe de pivotement vertical A-A'. Ceci permet de faciliter le retournement du dispositif de couplage sur lui-même, et donc sa manutention par l'utilisateur.

De préférence, au moins deux roulettes folles 232 sont déportées relativement au boitier 24, c'est-à-dire que ces roulettes folles 232 ne s'étendent pas sous le boitier 24. Avantageusement, les roulettes folles déportées peuvent être les roulettes folles les plus proches d'une face arrière 242 du boitier 24. Ceci permet de limiter les risques de basculement du dispositif de couplage 2 lors de l'amarrage de l'unité mobile autonome 3 au module d'interfaçage 22.

Le socle 23 est apte à recevoir le boitier 24 sur lequel sont fixés l'ensemble d'organes de liaison 21, le module d'interfaçage 22, et la poignée 25. Le boitier 24 peut être fixé sur le socle 23 par tout moyen connu de l'homme du métier (soudage, boulonnage, collage, agrafage, rivetage, etc.).

Comme le dispositif de couplage 2 n'intègre pas de batteries, son poids est relativement limité. Notamment, le poids total du dispositif de couplage 2 est inférieur à 10 kilogrammes (préférentiellement inférieur à 7 kilogrammes), ce qui facilite sa manipulation par l'utilisateur.

### 2.2. Boîtier

Le boitier 24 permet de soutenir l'ensemble d'organes de liaison 21, le module d'interfaçage 22, la poignée 25 ainsi qu'un réseau de câbles électriquement conducteurs (non représentés) pour connecter électriquement l'ensemble d'organes de liaison 21 au module d'interfaçage 22.

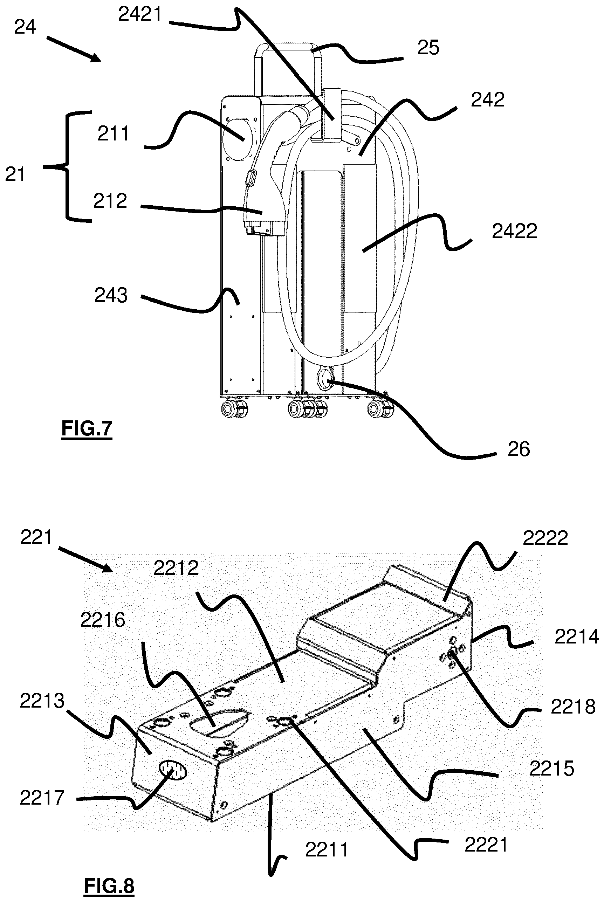

Le boitier 24 peut être de forme parallélépipédique. En référence aux figures 6 et 7, le boitier 24 comporte :
- une face avant 241,
- une face arrière 242 opposée à la face avant 241,
- une paire de faces latérales 243 entre les faces avant 241 et arrière 242,
- un fond 244 destiné à venir en contact avec le socle 23, les faces avant 241, arrière 242 et latérales 243 s'étendant perpendiculairement au fond 244 dans une direction opposée au socle 23, et
- un capot supérieur 245 opposé au fond 244.

Le boitier 24 comporte également une cavité 246 destinée à recevoir le module d'interfaçage 22, comme il sera décrit plus en détails dans la suite. Cette cavité 246 est traversante. Plus précisément, la cavité 246 débouche sur les faces avant 241 et arrière 242 du boitier 24. La cavité 246 est délimitée par une paire de parois internes verticales (parallèles aux faces latérales 243) et une paroi interne supérieure oblique (s'étendant entre les parois internes verticales).

La face avant 241 est la face du boitier 24 au niveau de laquelle l'unité mobile autonome 3 est destinée à venir en regard lors du raccordement du module d'amarrage 31 au module d'interfaçage 22.

Avantageusement, le dispositif de couplage 2 peut comprendre un (ou plusieurs) marqueur(s) de positionnement 247 monté(s) sur la face avant 241 du boitier 24, et disposé(s) autour de la cavité 246. Ce (ou ces) marqueur(s) de positionnement 247 est (sont) configuré(s) pour être détecté(s) par un (ou plusieurs) capteur(s) (non représentés) de l'unité mobile autonome 3. Ce (ou ces) marqueur(s) de positionnement permet(tent) à l'unité mobile autonome 3 de faciliter la détection de sa position relativement à la face avant 241 du dispositif de couplage 2.

Dans le mode de réalisation illustré à la figure 6, le dispositif de couplage 2 comprend deux marqueurs de positionnement 247 disposés de part et d'autre de la cavité 246. La présence de deux (ou plus de deux) marqueurs de positionnement 247 permet à l'unité mobile autonome 3 de faciliter la détection de son orientation relativement à la face avant 241 du dispositif de couplage 2.

Différentes solutions peuvent être proposées pour le(s) marqueur(s) de positionnement 247, parmi lesquelles :
- une solution optique active dans laquelle chaque marqueur de positionnement 247 comprend une source lumineuse - telle qu'une diode électroluminescentes (LED) - disposée autour de la cavité 246, et/ou
- une solution optique passive dans laquelle chaque marqueur de positionnement 247 comprend un élément réfléchissant - tel qu'un panneau autocollant - disposé autour de la cavité 246, et/ou
- une solution électromagnétique dans laquelle chaque marqueur de positionnement 247 comprend un circuit électrique passif résonnant disposé autour de la cavité 246.

L'avantage d'utiliser une solution passive est de limiter la consommation en énergie électrique par le dispositif de couplage 2. L'avantage d'utiliser une solution optique passive est de limiter l'émission d'ondes électromagnétiques susceptibles de perturber le fonctionnement du dispositif de couplage 2 et/ou de l'unité mobile autonome 3.

Dans tous les cas, l'unité mobile autonome 3 comprend un (ou plusieurs) capteur(s) adapté(s) pour interagir avec le(s) marquer(s) de positionnement 247. Ce (ou ces) capteur(s) peut (peuvent) consister en :
- un détecteur de lumière - tel qu'une caméra - lorsque le(s) marqueur(s) de positionnement 247 consiste(nt) en un (ou des) marqueur(s) optique(s), et/ou
- un circuit résonnant lorsque le(s) marquer(s) de positionnement 247 consiste(nt) en un (ou plusieurs) circuit(s) électrique(s) résonnant(s).

Comme illustré à la figure 7, le boitier 24 comprend également un crochet 2421 sur sa face arrière 242. Ce crochet 2421 permet de suspendre un composant de connectique de l'ensemble d'organes de liaison 21.

Avantageusement, la face arrière 242 (et/ou le crochet 2421) peut (peuvent) comprendre un (ou plusieurs) amortisseur 2422 destiné à absorber les chocs en cas de contact de la face arrière 242 ou du crochet 2421 avec la carrosserie du véhicule 1. En effet, la face arrière 242 du boitier 24 est destinée à venir en regard du véhicule 1.

Dans l'hypothèse où dispositif de couplage 2 serait plaqué contre la carrosserie du véhicule 1, l'amortisseur (ou les amortisseurs) permet(tent) de limiter les risques de dégradation (rayure, bossage) de la carrosserie du véhicule 1. L'amortisseur 2422 (ou les amortisseurs) peut (peuvent) être de tout type connu de l'homme du métier. Dans le mode de réalisation illustré à la figure 7, chaque amortisseur 2422 consiste en une couche de matériau flexible non abrasif, tel qu'une mousse.

### 2.3. Ensemble d'organes de liaison

L'ensemble d'organes de liaison 21 permet de raccorder électriquement le dispositif de couplage 2 au véhicule 1. L'ensemble d'organes de liaison 21 comprend différents composants de connectique pour s'adapter aux différents types de véhicules électriques existants.

Notamment, l'ensemble d'organes de liaison 21 comprend un premier composant de connectique 211 permettant une charge/recharge en courant alternatif (AC) des moyens de stockage de véhicules supportant ce mode de chargement/rechargement. Ce premier composant de connectique 211 comprend une prise électrique destinée à recevoir des moyens de connexion de véhicules adaptés à une charge/recharge en courant alternatif. Comme illustré aux figures 2 à 4, cette prise électrique peut être montée dans une face latérale 243 du boitier 24. Avantageusement, cette prise électrique peut être coiffée d'un couvercle pivotant, notamment pour éviter les risques d'encrassement de la prise électrique, ou encore la pénétration d'eau dans la prise électrique (par exemple en cas de pluie).

L'ensemble d'organes de liaison 21 comprend de plus un deuxième composant de connectique 212 permettant une charge/recharge en courant continu (DC) des moyens de stockage de véhicule supportant ce mode de chargement/rechargement. Ce deuxième composant de connectique 212 comprend un câble électriquement conducteur, et une tête de branchement à l'extrémité libre du câble électriquement conducteur. Cette tête de branchement est destinée à être insérée dans des moyens de connexion de véhicules 1 adaptés à une charge/recharge en courant continu.

Le lecteur aura compris que l'ensemble d'organes de liaison 21 (et en particulier chacun des composants de connectique 211, 212) est électriquement connecté au module d'interfaçage 22 (et en particulier à une (ou des) borne(s) de connexion du module d'interfaçage qui seront décrite dans la suite) pour permettre le passage du courant électrique délivré par l'unité mobile autonome 3 (via le module d'interfaçage 22) au véhicule 1 (via l'ensemble d'organes de liaison 21). Cette connexion électrique est assurée par le réseau de câbles électriquement conducteurs contenu dans le boitier 24.

### 2.4. Module d'interfaçage

Le module d'interfaçage 22 permet le raccordement électrique du dispositif de couplage 2 à l'unité mobile autonome 3. Le module d'interfaçage 22 comporte :
- un logement 221 illustré à la figure 8, et
- au moins une borne de connexion 222 montée dans le logement 221, ladite et au moins une borne de connexion 222 étant destinée à coopérer avec des moyens de connexion complémentaires (non représentés) du module d'amarrage 31.

En référence à la figure 8, le logement 221 comprend une semelle 2211, une façade 2212 opposée à la semelle 2211, et quatre parois latérales 2213, 2214, 2215 entre la semelle 2211 et la façade 2212.

Plus précisément, les parois latérales 2213, 2214, 2215 sont composées :
- d'une paroi oblique 2213 allant en se resserrant vers le haut à partir de la semelle 2211,
- d'une paroi droite 2214 opposée à la paroi oblique 2213, et
- de deux parois transverses 2215 entre les parois oblique 2213 et droite 2214, de sorte que la section droite du logement 221 est avantageusement celle d'un trapèze rectangle.

La présence d'une paroi oblique 2213 permet de limiter les risques de frottement du module d'interfaçage 22 contre la paroi interne supérieure de la cavité 246 lors du basculement d'une position escamotée à une position déployée.

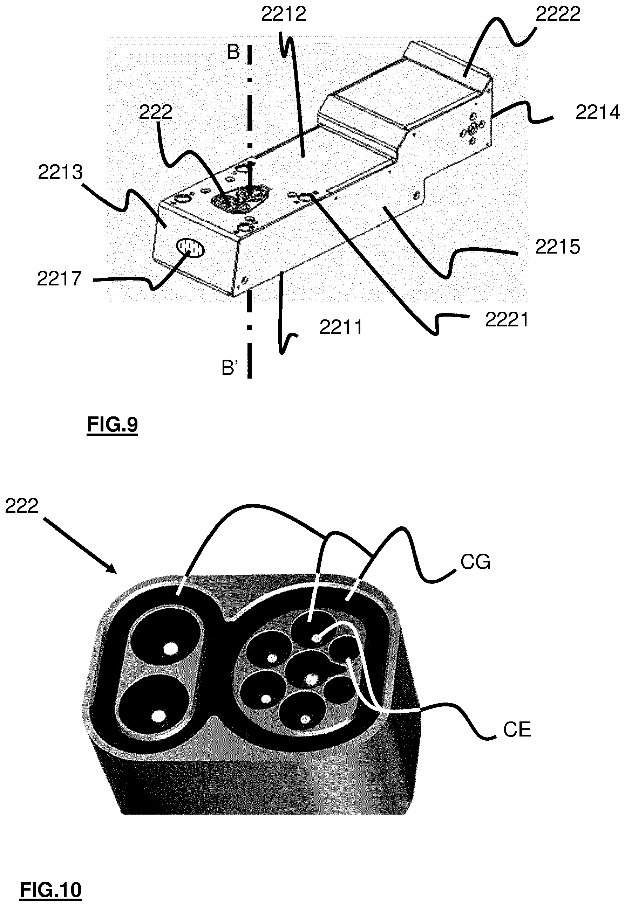

Chaque borne de connexion 222 est accessible via au moins un orifice 2216 pratiqué dans la façade 2212 du logement 221. Comme illustré à la figure 10, chaque borne de connexion 222 comprend :
- un (ou plusieurs) canon(s) de guidage CG s'étendant selon un axe B-B' perpendiculaire à la façade 2212 d'une part et à la semelle 2211 d'autre part, et
- un (ou plusieurs) connecteur(s) électrique(s) CE disposé(s) dans le canon de guidage,
de sorte que chaque borne de connexion 222 est accessible selon une direction B-B' allant de la façade 2212 vers la semelle 2211. Ainsi, chaque borne de connexion 222 est visible et accessible depuis la façade 2212 du logement 221.

Comme illustré aux figures 8 et 9, la façade 2212 du logement 221 comprend un (ou plusieurs) trou(s) borgne(s) 2221 (notamment quatre). Ce(s) trou(s) borgne(s) 2221 est (sont) destiné(s) à coopérer avec un (ou des) pion(s) d'alignement (de forme complémentaire) du module d'amarrage 31 lors du raccordement de l'unité mobile autonome 3 au dispositif de couplage 2. Chaque trou borgne 2221 présente par exemple la forme d'un demi cône dont la grande base est plus proche de la façade 2212 et la petite base est plus proche de la semelle 2211. Ces trou(s) borgne(s) 2221 et pion(s) permettent de faciliter l'alignement du module d'amarrage 31 avec le module d'interfaçage 22 lors du raccordement de l'unité mobile autonome 3 au dispositif de couplage 2.

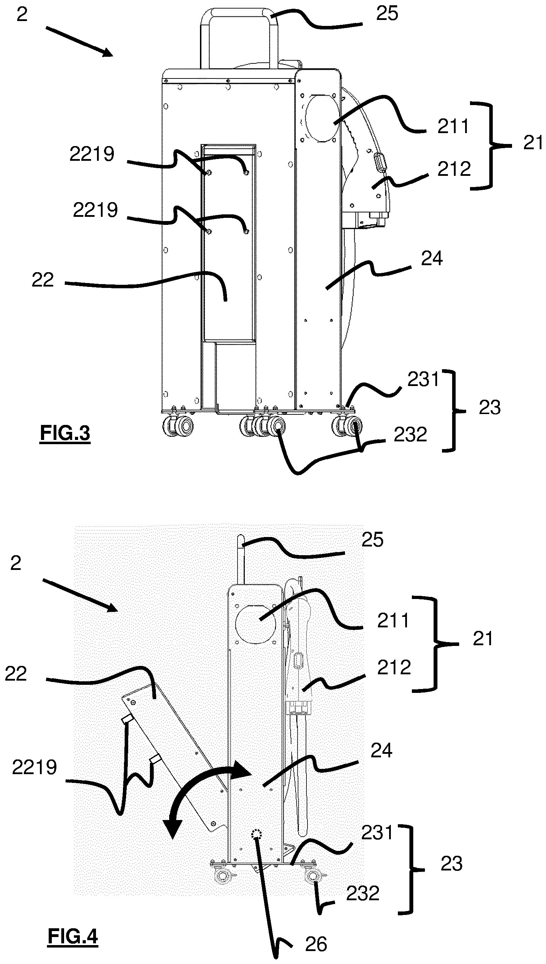

En référence aux figures 2 à 4, le module d'interfaçage 22 est fixé au boitier 24 au niveau de la cavité 246. Avantageusement, le module d'interfaçage 22 est fixée au boitier 24 par une liaison pivot 26 pour permettre le déplacement en rotation du module d'interfaçage 22 relativement au boitier 24 entre :
- une position escamotée (cf. figure 3) dans laquelle le module d'interfaçage 22 s'étend dans la cavité 246, la semelle 2211 du module d'interfaçage 22 et la face avant 241 du boitier 24 étant coplanaires dans la position escamotée, et
- une position déployée dans laquelle le module d'interfaçage 22 s'étend (au moins partiellement) en dehors de la cavité 246, la semelle 2211 du module d'interfaçage 22 s'étendant dans un plan perpendiculaire à la face avant 241 du boitier 24 dans la position déployée.

Le positionnement du module d'interfaçage 22 dans la position escamotée permet de limiter les risques de chute de débris (ou d'eau en cas de pluie) dans l'orifice 2216 du logement 221 contenant la borne de connexion 222. Il permet également de réduire l'encombrement du dispositif de couplage 2 afin de faciliter :
- la manutention du dispositif de couplage 2, par exemple pour son déplacement depuis une station d'accueil vers le véhicule 1 à charger/recharger, et
- le rangement du dispositif de couplage 2 dans un espace restreint de la station d'accueil.

Le positionnement du module d'interfaçage 22 dans la position déployée permet à celle-ci de s'étendre en saillie vers l'extérieur du boitier 24, de sorte que la borne de connexion 222 soit orientée vers le haut (le sol définissant une orientation vers le bas). Dans la position déployée, la borne de connexion 222 est donc accessible par le « dessus ». L'unité mobile autonome 3 peut alors raccorder électriquement les moyens de connexion du module d'amarrage 31 à la borne de connexion 222 en positionnant le module d'amarrage 31 au droit de la borne de connexion 222 et en déplaçant le module d'amarrage 31 verticalement vers le sol.

La liaison pivot 26 comprend :
- des têtes d'axe 261 s'étendant en saillie vers l'extérieur des parois internes verticales de la cavité 246, et
- des paliers 2218 ménagés dans les parois transverses 2215 du logement 221.

Plus précisément, chaque tête d'axe 261 s'étend en saillie vers l'extérieur d'une paroi interne verticale respective de la cavité 246. Chaque tête d'axe 261 est destinée à coopérer avec un palier 2218 respectif ménagé sur une paroi transverse 2215 respective du logement 221.

Les têtes d'axe 261 sont configurées pour tourillonner dans les paliers 2218, et permettre la rotation du module d'interfaçage 22 autour la liaison pivot 26 entre les positions escamotée et déployée, comme illustré à la figure 4.

La liaison pivot 26 peut également comprendre un (ou plusieurs) amortisseur(s) rotatif(s). Plus précisément, au moins l'une des têtes de l'axe 261 peut être associée à un amortisseur rotatif. Ceci permet d'éviter des mouvements de rotation trop brusques du module d'interfaçage 22 autour de la liaison pivot 26, notamment lors du passage de la position escamotée à la position déployée. L'amortisseur (ou les amortisseurs) rotatif(s) peut (peuvent) être de tout type connu de l'homme du métier.

Tel qu'illustré aux figure 8 et 9, le logement 221 peut comprendre une (ou plusieurs) patte(s) de traction 2222 s'étendant en saillie vers l'extérieur de la façade 2212 dans une direction opposée à la semelle 2211. Cette (ou ces) patte(s) de traction 2222 permet(tent) de faciliter le déplacement par l'utilisateur du module d'interfaçage 22. En particulier, l'application par l'utilisateur d'une force d'appui sur la patte de traction 2222 (par exemple avec son pied) induit le basculement du module d'interfaçage 22 vers la position escamotée.

Le logement 221 peut également comprendre des moyens de retenu 2217. Ces moyens de retenu 2217 sont destinés à coopérer avec des moyens de retenu complémentaires 248 ménagés dans le boitier 24. Ces moyens de retenu 2217 et de retenu complémentaires 248 permettent de maintenir le module d'interfaçage 22 dans la position escamotée en l'absence d'une force extérieure appliquée par l'utilisateur du dispositif de couplage 2.

Les moyens de retenu 2217 et de retenu complémentaires 248 peuvent être de tout type connu de l'homme du métier. Par exemple, dans le mode de réalisation illustré aux figures 6 et 9, la paroi oblique 2213 du logement 221 comporte un (ou plusieurs) aimant(s) permanent, et la paroi oblique de la cavité 246 du boitier 24 comporte un (ou plusieurs) contre-aimant(s). Chaque aimant du logement 221 est destiné à coopérer avec un contre-aimant respectif de la cavité 246. Plus précisément, les aimants et contre-aimants sont positionnés sur les parois obliques du logement 221 et de la cavité 246 de sorte que lorsque le module d'interfaçage 22 est dans la position escamotée, chaque aimant s'étend en regard de son contre-aimant associé.

Avantageusement, la semelle 2211 du logement 221 peut comprendre un (ou plusieurs) plot(s) 2219 sur sa face externe. Ce(s) plot(s) 2219 est (sont) destiné(s) à venir en contact avec le sol lorsque le module d'interfaçage 22 est dans la position déployée. Ceci permet de maintenir la semelle 2211 à une distance non nulle du sol, afin de limiter les risques de dégradation (rayure, fêlure, etc.) de la face externe de la semelle 2211.

Chaque plot 2219 peut comprendre un cylindre réalisé dans un matériau élastique. Ceci permet au plot d'absorber les chocs, notamment lors du passage du module d'interfaçage 22 de la position escamotée à la position déployée (sans le(s) plot(s), la face externe de la semelle 2211 heurterait le sol, ce qui pourrait entraîner une dégradation de celle-ci). Ceci permet en outre au module d'interfaçage 22 de compenser les irrégularités éventuelles du sol. En s'écrasant plus ou moins lors de la connexion du module d'amarrage 31 au module d'interfaçage 22, le(s) plot(s) 2219 permet(tent) de garantir un appui de force calibrée et d'assurer un positionnement adéquat de la (ou des) borne(s) de connexion 222 relativement aux moyens de connexion complémentaires du module d'amarrage 31. Chaque plot 2219 peut en outre comprendre une couche métallique à l'extrémité libre de chaque cylindre élastique afin de réduire l'usure des plots 2219.

Dans certaines variantes de réalisation, la semelle 2211 du logement 221 peut comprendre une (ou plusieurs) lumière(s) traversante(s) ménagée(s) sous la (ou les) borne(s) de connexion 222. Ce(s) lumière(s) traversante(s) permet(tent) de faciliter l'évacuation d'eau susceptible de s'écouler dans l'orifice de la façade 2212 lorsque le module d'interfaçage 22 est dans la position déployée, par exemple en cas de pluie.

### 2.5. Poignée

La poignée 25 permet de faciliter la préhension du dispositif de couplage 2 par l'utilisateur. Dans le mode de réalisation illustré à la figure 6, la poignée 25 présente la forme d'un « U » inversé et est fixé au capot 245 du boitier 24.

Il est bien évident pour l'homme du métier que la poignée 25 peut présenter d'autres formes et/ou être fixée à un autre composant du boitier 24.

Par exemple, dans un mode de réalisation, la poignée 25 présente la forme d'un cylindre à bouton et est fixée sur la face arrière 242 du boitier 24.

Dans un autre mode de réalisation, la poignée 25 consiste en un évidement réalisé dans le capot 245 du boitier 24.

### 3. Principe de fonctionnement

On va maintenant décrire plus en détails le principe de fonctionnement du dispositif de couplage 2 selon l'invention.

On suppose ici que l'utilisateur a stationné son véhicule sur une aire de stationnement et souhaite recharger les moyens de stockage de son véhicule 1.

Dans une première étape, l'utilisateur s'équipe d'un dispositif de couplage 2 entreposé dans une station d'accueil de l'aire de stationnement. Il saisit la poignée 25 du dispositif de couplage 2 et le fait rouler sur le sol pour l'amener à proximité de son véhicule 1.

Une fois le dispositif de couplage 2 à proximité de son véhicule 1, l'utilisateur raccorde électriquement l'un des composants de connectique 211, 212 de l'ensemble d'organes de liaison 21 (en fonction du type de rechargement (i.e. AC ou DC) souhaité) aux moyens de connexion de son véhicule 1.

L'utilisateur applique ensuite une force de poussée sur la façade 2212 du module d'interfaçage 22 depuis la face arrière 242 du boitier 24, par exemple avec le pied. Cette force appliquée par l'utilisateur « *contre »* la force magnétique entre les moyens de retenu 2217 et de retenu complémentaires 248, de sorte que le module d'interfaçage 22 se déplace en rotation autour de la liaison pivot 26.

Le module d'interfaçage 22 bascule de la position escamotée vers la position déployée. Lorsque le module d'interfaçage 22 est proche de la position déployée, son mouvement est ralenti par l'amortisseur rotatif. Les plots 2219 viennent en contact avec le sol : le module d'interfaçage 22 est alors dans la position déployée.

L'utilisateur oriente le dispositif de couplage 2 de sorte que la face arrière 242 du boitier 24 soit en regard du véhicule 1. L'utilisateur commande ensuite la recharge des moyens de stockage de son véhicule auprès d'un service de gestion de l'aire de stationnement.

Une fois le dispositif de couplage 2 installé, l'unité mobile autonome 3 détecte grâce aux moyens d'acquisition d'images, le dispositif de couplage 2 associé au véhicule 1 pour lequel l'utilisateur souhaite charger/recharger les moyens de stockage d'énergie. Cette détection peut être basée sur la couleur, la forme ou toute autre solution technique connue de l'homme du métier pour la détection d'un objet d'intérêt.

L'unité mobile autonome 3 se déplace vers le véhicule 1 pour se raccorder électriquement au dispositif de couplage 2. L'unité mobile autonome 3 détecte les marqueurs 247 disposés sur la face avant 241 du boitier 24 et détermine sa position et son orientation relativement au dispositif de couplage 2. L'unité mobile autonome 3 recalcule sa position et son orientation périodiquement pour assurer un positionnement précis du module d'amarrage 31 relativement au module d'interfaçage 22.

L'unité mobile autonome 3 centre une niche de réception s'étendant sous le module d'amarrage 31 relativement au module d'interfaçage 22 grâce à la détection des marqueur 247. Cette niche de réception est destinée à recevoir la portion du module d'interfaçage 22 s'étendant en saillie du boitier 24 dans la position déployée. Lorsque la niche de réception est centrée relativement au module d'interfaçage 22, l'unité mobile autonome 3 avance vers le dispositif de couplage 2 de sorte que le module d'interfaçage 22 pénètre dans la niche de réception.

Lorsque le module d'amarrage 31 s'étend au droit du module d'interfaçage 22 (et en particulier lorsque les moyens de connexion du module d'amarrage 31 sont au-dessus des bornes de connexion 222), l'unité mobile autonome 3 s'immobilise.

L'unité mobile autonome 3 commande ensuite (via un module de contrôle de l'unité mobile tel qu'un processeur, un microcontrôleur ou tout autre type de module de contrôle connu de l'homme du métier) le déplacement du module d'amarrage 31 verticalement vers le sol. Le module d'amarrage 31 se déplace verticalement en direction du module d'interfaçage 22. Le (ou les) pion(s) d'alignement pénètre(nt)n dans le(s) trou(s) borgne(s) 2221 ménagé(s) dans la façade 2212 du module d'interfaçage 22. Les formes tronconiques complémentaires :
- du (ou des) pion(s) d'alignement, et
- du (ou des) trou(s) borgne(s) 2221
permettent (par frottement lors de l'introduction du/des pions dans le/les trous borgnes) d'ajuster la position du module d'interfaçage 22 relativement au module d'amarrage 31.

Lorsque le(s) pion(s) d'alignement a (ont) totalement pénétré(s) dans le(s) trou(s) borgne(s) 2221, les moyens de connexion du module d'amarrage 31 viennent s'enficher dans les bornes de connexion 222 du module d'interfaçage 22. L'unité mobile autonome 3 immobilise le module d'amarrage 31 et la recharge des moyens de stockage du véhicule 1 peut débuter.

Une fois les moyens de stockage du véhicule 1 rechargés, l'unité mobile autonome 3 déplace le module d'amarrage 31 dans une direction verticale opposée au sol (i.e. vers le haut). Les moyens de connexion se dégagent des bornes de connexion 222 du module d'interfaçage 22.

L'unité mobile autonome 3 peut alors se déplacer pour charger/recharger les moyens de stockage d'énergie d'un autre véhicule.

Lorsque l'utilisateur revient vers son véhicule 1, l'utilisateur applique une force d'appui sur la patte de traction 2222, par exemple avec son pied. La force appliquée par l'utilisateur fait basculer le module d'interfaçage 22 qui se déplace en rotation autour de la liaison pivot 26 de la position déployée jusqu'à la position escamotée.

L'utilisateur déconnecte ensuite le composant de connectique 211, 212 de son véhicule 1, et range le dispositif de couplage 2 dans la station d'accueil.

### 4. Conclusions

Le dispositif de couplage décrit précédemment permet de faciliter la charger/recharger de moyens de stockage d'énergie d'un véhicule. Il permet en outre de limiter le nombre de bornes de chargement nécessaires sur une aire de stationnement.

Le lecteur aura compris que de nombreuses modifications peuvent être apportées à l'invention décrite précédemment sans sortir matériellement des nouveaux enseignements et des avantages décrits ici.

## Revendications

1. Dispositif de couplage (2) mobile pour le raccordement électrique de moyens de stockage d'énergie électrique d'un véhicule (1) à une source d'alimentation en énergie électrique, le dispositif comprenant :
- un socle (23) incluant des roulettes (232),
- un boitier (24) monté sur le socle (23), ledit boitier (24) incluant une face avant (241), et une cavité (246) débouchant sur la face avant (241),
- un ensemble d'organes de liaison (21) pour le raccordement électrique du dispositif de couplage (2) au véhicule (1), et
- un module d'interfaçage (22) pour le raccordement électrique du dispositif de couplage (2) à la source d'alimentation en énergie électrique, ledit module d'interfaçage (22) comportant :
∘ un logement (221) incluant une semelle (2211), et
∘ au moins une borne de connexion (222) montée dans le logement (221) et destinée à coopérer avec des moyens de connexion de la source d'alimentation, chaque borne de connexion (222) s'étendant selon un axe (B-B') perpendiculaire à la semelle (2211),
***caractérisé en ce que*** le module d'interfaçage (22) est fixé au boitier (24) par une liaison pivot (26) pour permettre le déplacement en rotation du module d'interfaçage (22) relativement au boitier (24) entre :
- une position escamotée dans laquelle le module d'interfaçage (22) s'étend dans la cavité (246), la semelle (2211) du module d'interfaçage (22) et la face avant (241) du boitier (24) étant sensiblement coplanaires dans la position escamotée, et
- une position déployée dans laquelle le module d'interfaçage (22) s'étend au moins partiellement en dehors de la cavité (246), la semelle (2211) du module d'interfaçage (22) s'étendant dans un plan sensiblement perpendiculaire à la face avant (241) du boitier (24) dans la position déployée.

2. Dispositif de couplage selon la revendication 1, ***dans lequel*** la liaison pivot (26) comprend un amortisseur rotatif.

3. Dispositif de couplage selon l'une des revendications 1 ou 2, *dans **lequel*** le logement (221) comprend en outre une façade (2212) opposée à la semelle (2211), ladite façade (2212) incluant un orifice dans lequel est logé chaque borne de connexion (222) de sorte que chaque borne de connexion (222) est orientée dans une direction opposée au sol dans la position déployée.

4. Dispositif de couplage selon la revendication 3, ***dans lequel*** la façade (2212) du logement (221) comprend au moins un trou borgne d'alignement destiné à coopérer avec un pion d'alignement de la source d'alimentation en énergie électrique lors du raccordement de ladite source au module d'interfaçage (2).

5. Dispositif de couplage selon l'un quelconque des revendications 1 à 3, ***dans lequel*** le logement (221) comprend au moins une patte de traction (2222) s'étendant en saillie vers l'extérieur.

6. Dispositif de couplage selon les revendications 3 et 5 prises en combinaison, ***dans lequel*** la patte de traction (2222) s'étend en saillie de la façade (2212) dans une direction opposée à la semelle (2211).

7. Dispositif de couplage selon l'une quelconque des revendications précédentes, ***dans lequel*** le logement (221) comprend des moyens de retenu (2217) destinés à coopérer avec des moyens de retenu complémentaires (248) ménagés dans le boitier (24) lorsque le module d'interfaçage (22) est dans la position escamotée.

8. Dispositif de couplage selon la revendication 7, ***dans lequel*** les moyens de retenu (2217) comprennent au moins un aimant et les moyens de retenu complémentaires (248) comprennent au moins un contre-aimant associé, chaque aimant étant positionné sur le logement (221) de sorte à venir en regard de son contre-aimant associé lorsque le module d'interfaçage (22) est dans la position escamotée.

9. Dispositif de couplage selon l'une quelconque des revendications précédentes, ***dans lequel*** la semelle (2211) du logement (221) comprend au moins une lumière traversante ménagée sous ladite et au moins une borne de connexion (222).

10. Dispositif de couplage selon l'une quelconque des revendications précédentes, ***dans lequel*** la semelle (2211) du logement (221) comprend au moins un plot (2219) s'étendant en saillie vers l'extérieur du logement (221).

11. Dispositif de couplage selon la revendication 9, ***dans lequel*** chaque plot (2219) comprend :
- un cylindre fixé à une face externe de la semelle (2211), ledit cylindre étant réalisé dans un matériau élastique, et
- une couche de matériau métallique fixée sur l'extrémité libre du cylindre.

12. Dispositif de couplage selon l'une quelconque des revendications précédentes, ***dans lequel*** la source d'alimentation en énergie électrique est une unité mobile autonome (3), la face avant (241) du boitier (24) comprenant au moins un marqueur de positionnement (247) positionné autour de la cavité (246).

13. Dispositif de couplage selon la revendication 12, ***dans lequel*** chaque marqueur de positionnement (247) est du type marqueur optique et/ou marqueur à résonance électromagnétique.

14. Dispositif de couplage selon l'une quelconque des revendications précédentes, ***dans lequel*** le boitier (24) comprend en outre une face arrière (242) opposée à la face avant (241), ladite face arrière incluant un amortisseur (2422) destiné à absorber les chocs en cas de contact de la face arrière (242) avec le véhicule (1).

15. Dispositif de couplage selon la revendication 14, ***dans lequel*** l'amortisseur consiste en au moins une couche de matériau flexible non abrasif, tel qu'un élastomère.

16. Dispositif de couplage selon l'une quelconque des revendications précédentes, ***dans lequel*** le boitier (24) comprend un crochet (2421) pour suspendre un composant de connectique (211) de l'ensemble d'organes de liaison (21).

17. Dispositif de couplage selon l'une quelconque des revendications précédentes, ***dans lequel*** l'ensemble d'organes de liaison (21) comprend :
- un premier composant de connectique (211) pour la charge/recharge des moyens de stockage en courant alternatif (AC), et/ou
- un deuxième composant de connectique (212) pour la charge/recharge des moyens de stockage en courant continu (DC).

18. Dispositif de couplage selon l'une quelconque des revendications précédentes, ***lequel*** comprend en outre une poignée (25) de préhension fixée au boitier (24).
